# EUROPEAN PATENT APPLICATION

(11) **EP 2 782 021 A1**
(43) Date of publication of application: **24.09.2014**
(21) Application number: 14152264.9
(22) Date of filing: 23.01.2014
(51) Int. Cl.: G06F 13/40

(54) **Information processing apparatus and method of controlling**

(30) Priority: 19.03.2013 JP 2013056801
(71) Applicant: FUJITSU LIMITED, Kawasaki-shi, Kanagawa 211-8588 (JP)
(72) Inventor: Kuramoto, Masahiro, Kanagawa, 211-8588 (JP)
(74) Representative: HOFFMANN EITLE

(57) **Abstract**

The presence of a memory (16) that stores therein virtual bus data (161) representing a virtual bus tree configuration in which some of the routes in the I/O bus system (1) are virtually short-circuited; and a controller (15) that notifies the virtual bus data (161) to a CPU (30) disposed upstream of the I/O bus system (1) makes it possible to operate the power source of the devices on the I/O bus system while the system is active.

## Description

### FIELD

The embodiment discussed herein is directed to an information processing apparatus and a method of controlling.

### BACKGROUND

Peripheral Component Interconnect Express (PCIe) has been known as an example of a standard of a bus that connects a Central Processing Unit (CPU) and a Input/Output (I/O) device in a computer.

PCIe has a tree topology in which a root complex is positioned at the apex and I/O devices are endpoint. In order to connect multiple I/O devices, a PCIe switch (hereinafter simply called switch) is disposed at the intervening point of the tree topology. A switch has a two-stage tree structure that makes each port serve as a PCI-to-PCI (P2P) bridge.

An information processing apparatus that wishes to use many I/O devices has practically used multiple switches connected into multistage, which can increase prospective I/O devices.

### [Prior Art Literature]

### [Patent Literature]

[Patent Literature 1] Japanese Laid-open Patent Publication No. 2008-46722
[Patent Literature 2] Japanese Laid-open Patent Publication No. 2010-225085
[Patent Literature 3] International Publication Pamphlet No. WO2010-044409

However, in the event of a failure occurring at a switch in such an I/O bus system of a computer, the failure switch is not allowed to be powered off while the entire computer system is being energized. If a switch is forcibly powered off in a state of the entire system is being energized, the OS would panic and would come into a disable state. Accordingly, the failure switch is replaced with another switch after the entire system is shut down, which takes labor and time.

### SUMMARY

One of the objects of the present invention is to operate the power source of each device on the I/O system while the system is active.

In addition to the above object, the effect that are derived from the configuration of the following embodiment to carry out the invention to be detailed below but that a conventional technique does not reach can be also regarded as the object of the present invention.

For this purpose, there is provided an information processing apparatus comprising an Input/Output bus system having a tree shape formed by hierarchically connecting a plurality of relays, the information processing apparatus further including: a first storing unit that stores therein virtual bus data representing a virtual bus tree configuration in which some of the routes in the I/O bus system are virtually short-circuited; and a notifier that notifies the virtual bus data to a processing device disposed upstream of the I/O bus system.

There is provided a method for controlling an information processing apparatus comprising: an Input/Output (I/O) bus system having a tree shape formed by hierarchically connecting a plurality of relays and comprising an I/O device; and a processing device recognizing the I/O bus system as a virtual bus tree configuration in which some of the routes in the I/O bus system are virtually short-circuited, the method comprising: at the processing device, issuing an instruction to power off the I/O device that is to be removed; after removing the I/O device from the I/O bus system, storing not-installed data representing the I/Odevice is not mounted into a fourth storing unit being included in an upstream relay disposed upstream of the short-circuited routes of the I/O bus system among the plurality of switches; and responding to the processing device using the not-installed data stored in the fourth storing unit.

There is provided a method for controlling an information processing apparatus comprising: an Input/Output (I/O) bus system having a tree shape formed by hierarchically connecting a plurality of relays; and a processing device recognizing the I/O bus system as a virtual bus tree configuration in which some of the routes in the I/O bus system are virtually short-circuited, the method comprising: after mounting an I/O device onto the I/O bus system, at the processing device, issuing an instruction to power on the I/O device; storing data of the instruction issued for the I/O device into a fifth storing unit being included in an upstream relay disposed upstream of the short-circuited routes of the I/O bus system among the plurality of switches; and after powering on the I/O device, transmitting the data of the instruction, the data being stored in the fifth storing unit, to the I/O device.

The embodiment to be detailed below can control the power source of each device on the I/O bus system, keeping the system to be in an active state.

The object and advantages of the invention will be realized and attained by means of the elements and combinations particularly pointed out in the claims.

It is to be understood that both the foregoing general description and the following detailed description are exemplary and explanatory and are not restrictive of the invention.

### BRIEF DESCRIPTION OF DRAWINGS

FIG. 1 is a diagram schematically illustrating an I/O bus system of an information processing apparatus according to a first embodiment;
FIG. 2 is a diagram illustrating a virtual image bus of an I/O bus system of FIG. 1;
FIG. 3 is a diagram illustrating an example of the configuration of routing data of an information processing apparatus of the first embodiment;
FIG. 4 is a diagram illustrating an example of the configuration of an I/O bus system of an information processing apparatus of the first embodiment;
FIG. 5 is a diagram illustrating an exemplary virtual image bus of an I/O bus system of FIG. 4;
FIGs. 6A, 6B, and 6C are diagrams illustrating exemplary routing data of an I/O bus system of FIG. 4;
FIG. 7 is a diagram illustrating a manner of rewriting a packet header in an information processing apparatus of the first embodiment;
FIG. 8 is a diagram illustrating a manner of generating routing data in an information processing apparatus of the first embodiment;
FIG. 9 is a diagram illustrating a flow of data in an I/O bus system of an information processing apparatus of the first embodiment;
FIG. 10 is a diagram illustrating a virtual image bus of an I/O bus system of FIG. 9;
FIG. 11 is a diagram illustrating an example of the configuration of an I/O bus system of an information processing apparatus of the first embodiment;
FIG. 12 is a flow diagram illustrating an overview of a manner of managing an I/O bus system of an information processing apparatus of the first embodiment;
FIG. 13 is a sequence diagram illustrating a process performed when an information processing apparatus of the first embodiment is being started;
Fig. 14 is a flow diagram illustrating a succession of procedural steps of removing an I/O device from an information processing apparatus of the first embodiment in a state of being energized;
Fig. 15 is a flow diagram illustrating a succession of procedural step of removing an intervening device from an information processing apparatus of the first embodiment in a state of being energized;
Fig. 16 is a flow diagram illustrating a succession of procedural steps of adding an I/O device into an information processing apparatus of the first embodiment in a state of being energized;
Fig. 17 is a flow diagram illustrating a succession of procedural steps of adding an intervening device into an information processing apparatus of the first embodiment in a state of being energized;
Fig. 18 is a sequence diagram illustrating a succession of procedural steps of replacing an I/O device in an information processing apparatus of the first embodiment;
FIG. 19 is a diagram illustrating a first modification of the I/O bus system of an information processing apparatus of the first embodiment;
FIG. 20 is a diagram illustrating a second modification of the I/O bus system of an information processing apparatus of the first embodiment;
FIG. 21 is a diagram illustrating a third modification of the I/O bus system of an information processing apparatus of the first embodiment;
FIG. 22 is a diagram illustrating a virtual image bus of an I/O bus system of FIG. 21; and
FIG. 23 is a diagram illustrating a fourth modification of the I/O bus system of an information processing apparatus of the first embodiment.

### DESCRIPTION OF EMBODIMENT(S)

Hereinafter, an information processing device and a method of controlling according to a first embodiment will now be described with reference to the accompanying drawings. However, the embodiment and the modifications thereof that are to be detailed below are merely examples and do not intend to exclude another modification and application of techniques that are not referred in this description. In other words, various changes and modification can be suggested without departing from the gist of the embodiment. For example, the embodiment and the modifications can be combined. The accompanying drawings may include other elements and functions in addition to those in the drawings.

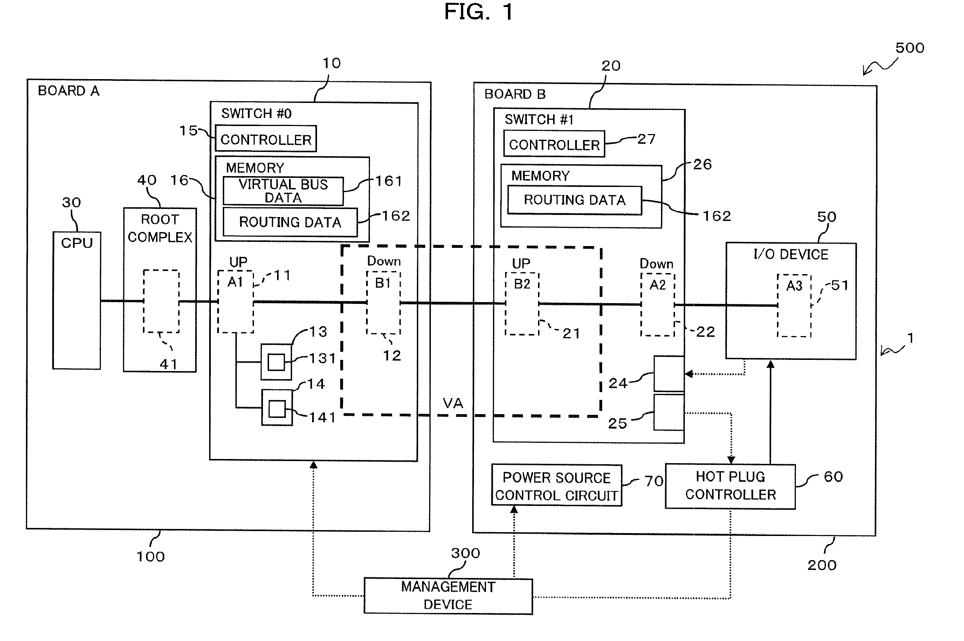

FIG. 1 is a diagram schematically illustrating an I/O (Input/Output) bus system 1 of an information processing apparatus 500 according to a first embodiment.

The I/O bus system 1 of FIG. 1 include multiple (two in the example of FIG. 1) boards 100 and 200, and a management device 300.

The boards 100 and 200 are electric parts including functional parts disposed on respective substrates and achieve various functions due to the operation of the functional elements thereon. Hereinafter, the board 100 and 200 are sometimes referred to as boards A and B, respectively. The boards 100 and 200 are connected to each other via, for example, a PCIe bus confirming to the PCIe standard.

The I/O bus system 1 has a tree topology that contains a root complex 40 mounted on the board 100 disposed at the apex of the topology and one or more I/O devices 50 at the endpoints of the topology. The root complex 40 and the I/O devices 50 will be detailed below. Hereinafter, in the I/O bus system 1, the side of the root complex 40 is referred to as upstream while the side of the I/O devices 50 is referred to as downstream.

The information processing apparatus 500 virtually short-circuits some of the routes in the I/O bus system 1 and has a function of causing a CPU (OS) 30 to recognize the image of the area except for the short-circuited routes. The short-circuited routes (segment) in the I/O bus system are referred to as a virtualized area VA. On the other hand, the configuration of the I/O bus system 1 part of which is virtualized and which is recognized by the OS is referred to as a virtualized image bus.

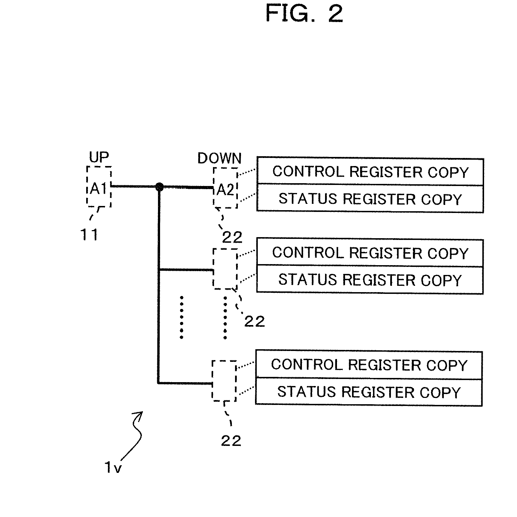

In the example of FIG. 1, an area including a downstream port 12 of a switch 10 and an upstream port 21 of a switch 20 is defined as the virtualized area VA. The virtual image bus 1v of the I/O bus system 1 of FIG. 1 is illustrated in FIG. 2.

As illustrated in FIG. 2, the upstream port 11 of the switch 10 is connected to the downstream port 22 of the switch 20 in the virtual image bus 1v. The virtual image bus 1v is recognized by the OS to have a configuration in which a switch is disposed in the lower level than the root complex 40 and an I/O device 50 is connected to the downstream port of the switch. This means that the device in the virtualized area VA is in a state of being hidden from the OS. Namely, the virtualized area VA can be considered as an area hidden from the OS.

A controller 15 of the switch 10 that is to be detailed below notifies the Central Processing Unit (CPU) 30, the superordinate device, of the virtual image bus 1v. The OS, which is executed by the CPU 30, recognizes the I/O bus system 1 to be the virtual image bus 1v.

The board 200 includes the switch 20, a power source control circuit 70, and a hot plug controller 60. In addition, a non-illustrated slot is formed on the board 200, and the I/O device 50 is detachably mounted onto the slot.

The I/O device 50 is an electronic device that is to be detachably installed to the non-illustrated slot of the board 200. The I/O device 50 includes a port 51, which is connected to the downstream port 22 of the switch 20 via a PCIe bus.

The switch 20 is a device that provides the PCIe bus with a fan-out function and connects the I/O device 50 with the switch 10 of the board A.

The switch 20 includes a controller 27, a memory 26, an upstream port 21, a status register 24, a control register 25, and a downstream port 22. In the example of FIG. 1, the board 200 includes a single switch 20 for simplifying the description, but the number of switches 20 is not limited to one and may alternatively be two or more as detailed below.

The upstream port 21 is connected to the downstream port 22 and the downstream port 12 of the switch 10. Furthermore, the downstream port 22 is connected to the port 51 of the I/O device 50. Alternatively, the downstream port 22 may be connected to an upstream port 21 of another switch 20, which does not appear in the drawing. Hereinafter, the upstream port 21 and the downstream port 22 of the switch 20 are sometimes represented by reference numbers B2 and A2, respectively. The upstream port and the downstream port may sometimes be simply called "ports".

For simplifying the description, the switch 20 of FIG. 1 is assumed to include two ports 21 and 22, but may alternatively has three or more ports.

The status register 24 stores therein status data representing the status of the I/O device 50 connected to the downstream port 22 in the switch 20. For example, the status data is written into the status register 24 by the I/O device 50. The status data has already been known and the detailed description thereof is omitted here.

The control register 25 stores therein control data to control the I/O device 50 connected to the downstream port 22 in the switch 20. For example, a power source control instruction transmitted from the root complex 40 is stored, as the control data, in the control register 25. The hot plug controller 60 that is to be detailed below turns on/off the power source of (i.e., powers on/off) the I/O device 50 in obedience to such a power source control instruction. The control data has already been known and the detailed description thereof is omitted here.

The status data and the control data respectively stored in the status register 24 and the control register 25 are read when needed and copies of these data pieces are transmitted to the board 100 that is to be detailed below and then stored into a first register 13 and a second register 14 of the switch 10 included in the board 100.

The memory 26 is a storing device that stores therein data and specifically stores therein various data pieces to be used by the switch 20 to achieve the functions of the switch. The memory 26 further stores therein routing data 162, which is data to be used for data forwarding in the I/O bus system 1 and which is to be detailed below. If the controller 27 in the switch 20 includes a processor such as a CPU, the memory 26 may store a program executed by the CPU in order to achieve the various functions.

The controller 27 is a controller that achieves the function of the switch 20. For example, the controller 27 carries out processing of forwarding a packet received by the upstream port 21 or the downstream port 22 to the destination of the packet. The controller 27 refers to the routing data 162 stored in the memory 26, rewrites the header of a packet to be forwarded, and transmits the packet to a port of the destination as to be detailed below. The processing carried out by the controller 27 will be detailed below in conjunction with processing carried out by the controller 15 of the switch 10.

The hot plug controller 60 turns on/off the power source of the I/O device 50 in obedience to a power source control instruction transmitted from the OS by, for example, turning on/off the power supply to the slot of the port 22 in the switch 20, the I/O device 50 being connected to the slot.

The hot plug controller 60 notifies the management device 300 of the status of the power source of the I/O device 50 (i.e. the slot), in other words, the on/off state of the I/O device 50.

The power source control circuit 70 controls power supply to the board 200, in other words, turns on/off the power source of the board 200. For example, the power source control circuit 70 controls the on/off state of the power source of the board 200.

As illustrated in FIG. 1, the board 100 is the main board of the information processing apparatus 500 and includes a CPU 30, the root complex 40, and the switch 10.

The CPU 30 is a processor that carries out controls and calculations and achieves various functions by executing an OS or programs stored in a non-illustrated memory. For example, the OS has a device managing function that manages individual I/O devices 50 connected to the information processing apparatus 500. The device managing function here confirms, through periodic search the information processing apparatus 500, whether another I/O device 50 is added to the I/O bus system 1.

The CPU 30 controls each I/O device 50 connected to the I/O bus system 1 and uses the function of the I/O device 50 by transmitting and receiving data (packets) to and from the I/O device 50. The CPU 30 (OS) further controls the on/off state of the power source of each I/O device 50 by transmitting a power source control instruction to the I/O device 50.

The root complex 40 is connected to the CPU 30 and a non-illustrated memory and functions as a root of the PCIe tree topology in the I/O bus system 1.

The switch 10 provides the PCIe bus with a fan-out function. Namely, the switch 10 is connected to the root complex 40 and the switch 20.

The switch 10 includes a controller 15, a memory 16, an upstream port 11, a first register 13, a second register 14, and a downstream port 12.

The upstream port 11 is connected to the downstream port 12 and a port 41 included in the root complex 40 while the downstream port 12 is connected to the upstream port 21 included in the board 200. Hereinafter, the upstream port 11 and the downstream port 12 are sometimes represented by reference numbers A1 and B1, respectively.

In the example of FIG. 1, the switch 10 includes two ports 11 and 12 for simplifying the description, but the number of ports is not limited to two and may alternatively be three or more.

The first register (a third storing unit) 13 and the second register (a third storing unit, a fourth storing unit, and a fifth storing unit) 14 are storing devices that store therein data to be read when an I/O device 50 is disconnected.

The first register 13 stores therein a status register copy (register data) 131 that is a copy of the status register 24 corresponding to the downstream port 22 connected to the I/O device 50.

The second register 14 stores therein a control register copy (register data) 141 that is a copy of the control register 25 corresponding to the downstream port 22 connected to the I/O device 50.

In transmitting a packet from the OS to the I/O device 50 on the I/O bus system 1 accompanying change in control register 25 in the switch 20, the control register value that the packet contains is stored to be the control register copy into the second register 14. Specifically, as to be detailed below, when the controller 15 receives a PCIe packet and converts the packet to pass the received PCIe packet through the virtualized area VA, the controller 15 stores the copy of the control register value included in the packet into the second register 14.

For example, when the I/O device 50 is to be hot-removed which means that the I/O device 50 is to be disconnected from the information processing apparatus 500 while power supply to the information processing apparatus 500 (the board A) is continued, the OS issues a packet that instructs the port A2 of the switch 20 to turn off the power source of the slot to the port A2. The packet is converted into a packet destined for port B2 of the switch 20 in the port A1 of the switch 10. At that time, the second register 14 of the port A1 makes a copy of the packet.

Here, a control register copy includes at least a Slot Capabilities Register, a Slot Control Register, and a Slot Status Register defined in the PCIe specification. These registers are copied from the control register 25 in obedience to an instruction from the management device 300 when the routing data 162 is to be set in the memory 16.

If the switch 20 has multiple downstream ports being connected to respective I/O devices 50, copies of the values of the status register 24 and the control register 25 of each of the multiple downstream ports are stored in the first register 13 and the second register 14, respectively, in association with data identifying the downstream port.

The memory 16 is a storing device that stores therein data and specifically stores therein data to achieve the function of the switch 10. The memory 16 stores therein the virtual bus data 161 and the routing data 162. If the controller 15 of the switch 10 is equipped with a processor such as a CPU, the memory 16 may store therein programs to be executed by the CPU to achieve various functions.

The virtual bus data 161 represents the configuration of the virtual image bus (see FIG. 2) 1v that is indicated to the OS. The virtual image bus 1v has a tree topology including the upstream port A1 in the switch 10 at the apex. The virtual image bus 1v indicated by the virtual bus data 161 is sometimes referred to a virtual bus tree 1v.

FIG. 2 is a diagram illustrating the virtual bus tree in the information processing apparatus 500 of the first embodiment. As illustrated in FIG. 2, it appears from the OS that the upstream port A1 is connected to the downstream port A2 and others. The virtual bus tree 1v in FIG. 2 illustrates multiple downstream ports in association with respective status register copies and control register copies.

This means that the virtual bus data 161 is notified to the OS along with the status register copies and the control register copies. The respective status register copies and control register copies are notified in association with the corresponding downstream ports 22 connected to the I/O devices 50.

The virtual bus data 161 is generated by the management device 300 that is to be detailed below.

The routing data 162 is data used to data forwarding in the I/O bus system 1 and is data to route packet to the destination I/O device 50 that the CPU 30 (OS) wishes to access. For example, the routing data 162 associates the destination of a packet with destination data and the number of a port to which the packet is to be forwarded.

The routing data 162 is generated for each port to be a destination and is registered in each port in the virtualized area VA on the switches 10 and 20. In the example of FIG. 1, the routing data 162 is provided to both ports B1 and B2.

For example, a packet accessing the port A2 or port A3 needs, at the port A1, data that the packet is destined for the port B2 and data that the packet is transmitted to the port B1 to reach the port B2. The routing data 162 functions as data to forward packet in such a virtualized area VA. Preparing the routing data 162 for each port in the virtualized area VA makes it possible to structure the above virtual bus tree. In other words, the routing data 162 is used for execute packet forwarding in the virtualized area VA.

Specifically, IDs valid only in the virtualized area are set in the ports 12 and 21 of the switches 10 and 20 included in the virtualized area VA (in the example of FIG. 1, the IDs are B1 and B2), and data accessing the I/O device 50 needs to pass the packet to the port having the set IDs is registered to be the routing data 162.

Into a switch included in the virtualized area VA serving as a route of the packet, data that the packet is transmitted to which port in the switch itself in order to bring the packet to such an ID is registered to be the routing data 162.

The specification of PCIe allows routing using either IDs or addresses. According to the specification, the information processing apparatus 500 determines the setting to carry out routing using IDs.

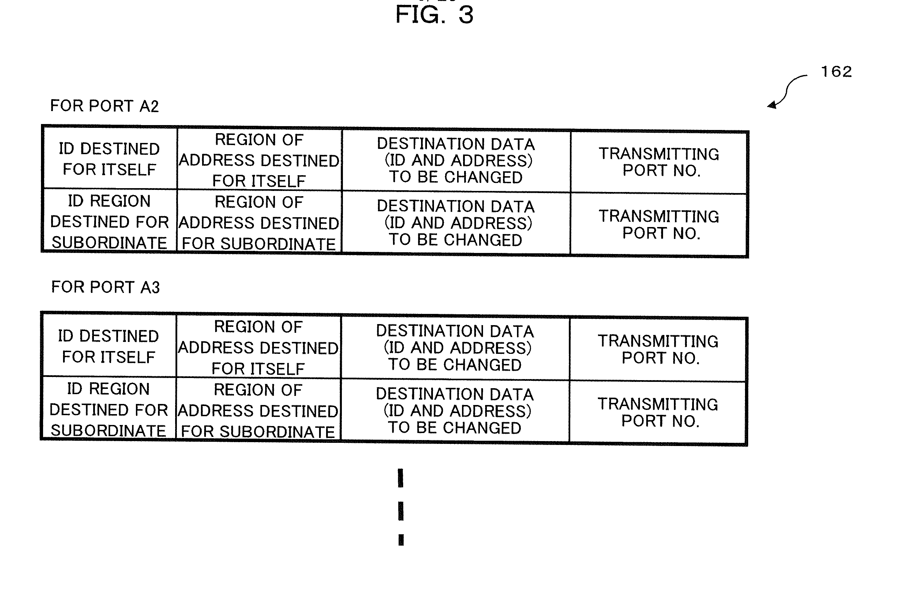

FIG. 3 is a diagram illustrating an example of the configuration of the routing data 162 in the information processing apparatus 500 of the first embodiment. In the example of FIG. 3, an ID destined for itself is associated with an ID region destined for itself, destination data (ID and address) to be changed, and a transmitting port number are associated with one another. On the other hand, an ID destined for a subordinate is associated with a region of address destined for a subordinate, destination data (ID and address) to be changed, and a transmitting port number are associated with one another.

Here, the destination address to be changed is data representing the destination of data (packet) and is used as an address attached to the header of the packet. The transmitting port number represents a port to which the packet is to be transmitted and the packet having been attached thereto the destination data to be changed, which representing an address, is transmitted to the port indicated by the transmitting port number. The transmitting port number is enough to uniquely specify the port to which the packet is to be transmitted and therefore may be other data.

A manner to determine whether the packet is destined for the port A2 or the port A3 has already been determined by the specification of PCIe. Furthermore, the PCIe specification predetermines, depending on the type of packet, whether packets are routed using IDs or addresses. The region of the address destined for itself can be omitted if another function defined in the PCIe specification can determine the region.

The routing data 162 depicted in FIG. 3 takes the form of a table (routing table), but the form of the routing data 162 is not limited to the table. The routing data 162 may be in the form except for a table.

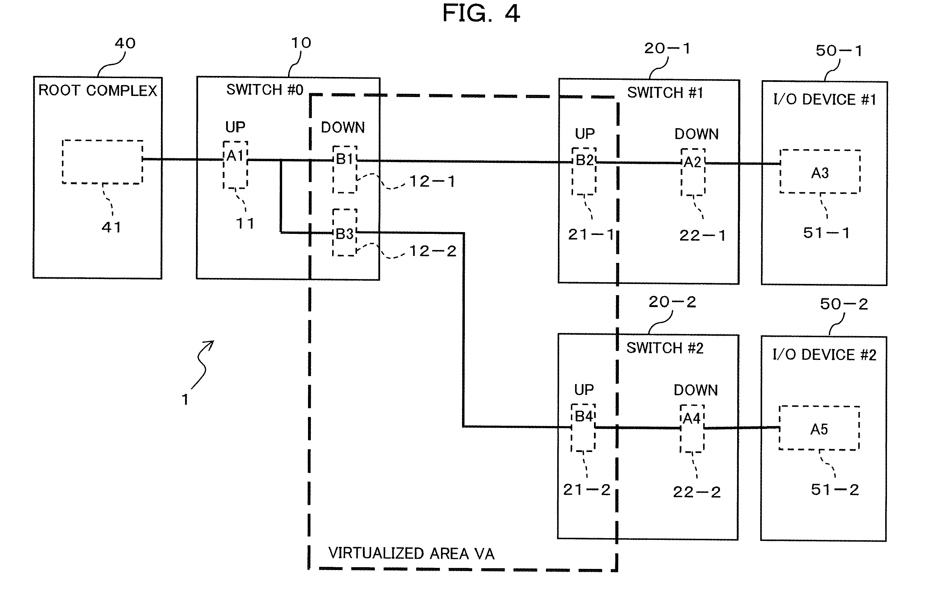

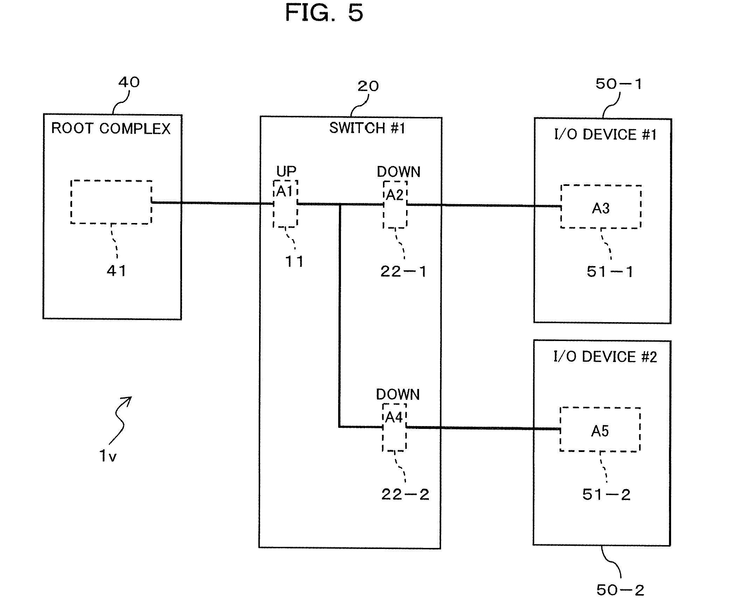

FIG. 4 is a diagram illustrating an example of the configuration of the I/O bus system 1 and FIG. 5 is a diagram illustrating an example of the virtual image bus 1v in the I/O bus system 1 of FIG. 4. FIGs. 4 and 5 omit illustration of some of elements, such as the CPU 30 and the boards 100 and 200.

In the I/O bus system 1 of FIG. 4, the switch 10 includes two downstream ports 12-1 and 12-2. Hereinafter, the downstream port is uniquely specified by an identifier (ID) of B1 and the other downstream port 12-2 is specified by an ID of B3. The switch 10 is sometimes be referred to as switch #0.

The downstream port 12-1 is connected to an upstream port 21-1 of a switch 20-1 while the downstream port 12-2 is connected to an upstream port 21-2 of a switch 20-2. Hereinafter, IDs B2 and B4 specify the upstream ports 21-1 and 21-2, respectively.

The switch 20-1 includes the upstream port 21-1 and a downstream port 22-1, which is connected to a port 51-1 of an I/O device 50-1. Hereinafter, IDs A2 and A3 specify the downstream port 20-1 and the port 51-1, respectively. The switch 20-1 is sometimes be referred to as switch #1.

The switch 20-2 includes the upstream port 21-2 and a downstream port 22-2, which is connected to a port 51-2 of an I/O device 50-2. Hereinafter, IDs A4 and A5 specify the downstream port 22-2 and the port 51-2, respectively. The switch 20-2 is sometimes be referred to as switch #2. Among the switches disposed downstream of the switch 10, one of the switch is discriminated by the reference number 20-1 or 20-2 or #1 or #2, but an arbitrary switch is represented by the reference number 20.

In the I/O bus system 1 of FIG. 4, the virtualized area VA is a region enclosing the downstream ports 12-1 and 12-2 of the switch 10, the upstream port 21-1 of the switch 20-1, and the upstream port 21-2 of the switch 20-2.

The above I/O bus system 1 is recognized as a virtual image bus 1v illustrated in FIG. 5 from the OS. Namely, it seems that the upstream port 11 is connected to the downstream ports 22-1 and 22-2. Furthermore, the downstream port 22-1 is connected to the port 51-1 of the I/O device 50-1 and the other downstream port 22-2 is connected to the port 51-2 of the I/O device 50-2.

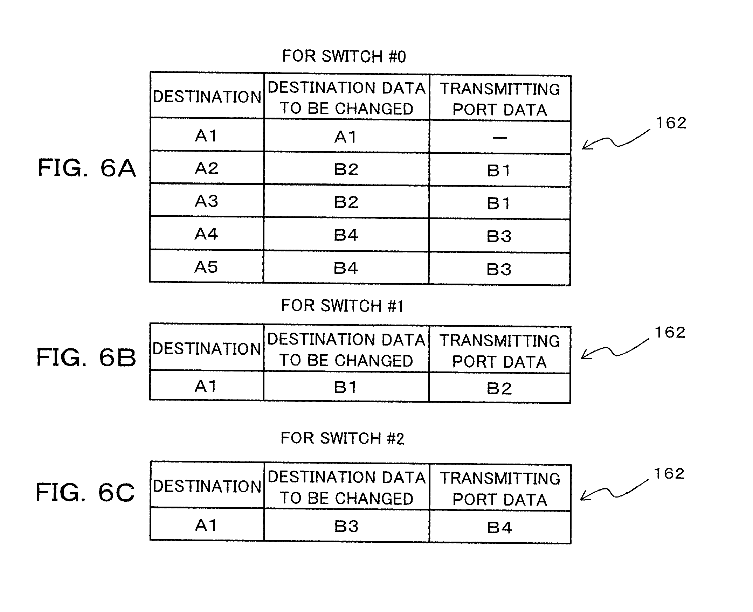

The I/O bus system 1 of FIG. 4 generates the routing data 162 of FIGs. 6A, 6B, and 6C. The routing data 162 is generated, notified to switches 10 and 20, and stored in respective memories 16 and 26 by the management device 300 that is to be detailed below.

FIGs. 6A, 6B, and 6C are diagrams illustrating the routing data 162 of the I/O bus system 1 of FIG. 4. FIG. 6A illustrates the routing data 162 for the switch #0, FIG. 6B illustrates the routing data 162 for the switch #1, and FIG. 6C illustrates the routing data 162 for the switch #2.

As depicted in FIGs. 6A, 6B, and 6C being related to the switches #0-#2, respectively, the routing data 162 are registered into the switches #0-#2 that includes the boundary of the virtualized area VA.

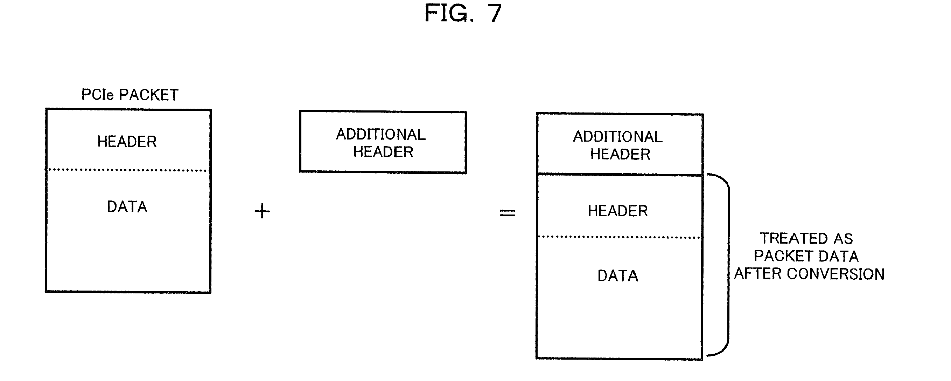

The manner of generating the routing data 162 will be detailed below with reference to FIG. 7.

The controller 15 achieves various functions of the switch 10. For example, the controller 15 carries out processing to forward a packet that the upstream port 11 or the downstream port 12 receives to the transmitting destination.

The controllers 15 and 27 refer to the routing data 162 stored in the memories 16 and 26 and rewrite the header of a packet to be forwarded so that the packet can be transmitted to a port of the destination. The controller 15 and the controller 27 forward packet in the same manner, so description will now be made in relation to the manner performed in the controller 15, for example.

FIG. 7 is a diagram illustrating a manner of rewriting the header of a packet in the information processing apparatus 500 of the first embodiment.

As illustrated in FIG. 7, the controller 15 in the switch 10 uses the entire PCIe packet received at the port A1 as the data without any processing and attaches a header to pass through the virtualized area VA to the PCIe packet.

For example, in the I/O bus system 1 of FIG. 4, when the PCIe packet received at the port A1 is destined for the port A3, the controller 15 refers to the routing data 162 for the destination port "A3" and thereby obtains the destination data "B2" to be changed and the transmitting port "B1".

The controller 15 regards the entire PCIe packet received as a data part and attaches the additional header indicating that the packet is destined for the port having the ID "B2" to the data part, so that the packet is converted. After the conversion, the entirety of the received PCIe packet is regarded as the data part. The controller 15 passes the converted packet to the port having the ID "B1". Consequently, the converted packet is transmitted from the port 12-1 to the port 21-1.

In the switch #1, the controller 27 removes the additional header from the received packet through inverse conversion to restore the PCIe packet, and transmits the restored PCIe packet to the port A3 of the I/O device #1, which is the ultimate destination. If another switch is downstream connected to the switch #1, the controller 27 attaches an additional header to the received packet by referring to the routing data 162 stored in the memory 26 in the same manner as performed by the controller 15 to convert the packet, and then transmits the converted packet to the transmitting port corresponding to the destination.

Furthermore, the controller 27 of the switch 20 instructs a packet from the I/O device 50 which route to take to reach the root complex 40 via the virtualized area VA while the OS is operating.

For example, in the I/O bus system 1 of FIG. 4, when the I/O device #1 is making an access to a non-illustrated main memory, the controller 27 of the switch #1 attaches an additional header to a memory-access packet by referring to the routing data 162 of FIG. 6B so that the memory-access packet is converted into a packet destined for the root complex 40.

Thereby, the entirety of the memory-access packet from the I/O device #1 is regarded as a data part after the conversion. The controller 27 of the switch #1 passes the converted packet to the port 21-1 having an ID "B2". Thereby, the converted packet is transmitted from the port 21-1 to the port 12-1

In the switch #0, the controller 15 removes the additional header from the received packet through inverse conversion to restore the memory-access packet, and transmits the restored memory-access packet to the root complex 40. The root complex 40 makes an access to the main memory in obedience to the operation of the CPU 30.

In the above manner, the controllers 15 and 27 disposed in the switches 10 and 20, which include the boundary of the virtualized area VA, convert transmitting port IDs of respective packets to be forwarded, so that packets to be communicated between the root complex 40 and the I/O device 50 can pass through the virtualized area VA to reach their destinations.

In the event of change in configuration of the I/O bus system 1 by adding or removing an I/O device 50 into or from the information processing apparatus 500, the controllers 15 and 27 obtain the routing data 152 of the configuration subjected to the change from the management device 300. The controllers 15 and 27 update the routing data 162 respectively stored in the memories 16 and 26 with the obtained routing data 162.

The controller 15 notifies the OS being, for example, activating the information processing apparatus 500 of the virtual bus data 161, so that the OS recognizes the I/O bus system 1 as the I/O bus system 1v indicated by the notified virtual bus data 161.

Furthermore, the controller 15 instructs a packet accessing the I/O device 50 which route to take to reach the I/O device 50 via the virtualized area VA while the OS is operating.

As described above, since the devices disposed in the virtualized area VA are not directly seen from the OS, hot-plugging (hot swapping) of a device in the virtualized area VA does not affect the OS.

Hereinafter, a state where no I/O device 50 is connected to a slot in the board 200 is referred to as "not-installed" while a state where an I/O device 50 is connected to the slot of the board 200 is referred to as "installed".

In the event of hot-removing of an I/O device 50 in the virtualized area VA, the management device 300 registers data "not-installed" into a control register copy corresponding to the removed I/O device 50 in the second register 14. Thereby, the second register 14 stores therein "not-mounting" data representing that an I/O device 50 is not mounted.

Upon receipt of a packet that the OS has transmitted, the controller 15 confirms the destination of the packet at the port A1. If the I/O device 50 assigned to be the destination is not installed, in other words, if an access to a slot not mounting thereon an I/O device 50 is being made, the controller 15 responds to the OS with the control register copy stored in the second register 14.

The first register 13 and the second register 14 of the port A1 in the switch 10 store therein copies of part or the entirety of setting register group of downstream ports in the virtual image bus 1v. The first register 13 and the second register 14 store therein at least copies of the status register 24 and the control register 25 of each slot. The number of register in the register group to be prepared is implementation-dependent and therefore may be increased or reduced.

When the capacity of the second register 14 is small, the controller 15 may reply to the OS with minimum requisite data that would not cause a panic in the OS such as the installation data (e.g., not-installed/installed) of the I/O device 50. Generally, since the data to be accessed from the OS when the I/O device 50 is not installed may be not more than power source operation and installation data, the controller 15 replies, when an access has been made to another register space, to the OS with notification that access has been made to a not-existing space defined in the PCIe specification. Thereby, the OS can escape from panicing.

After the power source of the I/O device 50 is turned on, requests from the OS to the I/O device 50 are for directly writing into and reading from the I/O device 50.

On the other hand, when a packet that the I/O device 50 has transmitted reaches the port B1, the controller 15 restores the packet into an original PCIe packet, which is then transmitted to the port A1 and finally reaches the root complex 40, which is the ultimate destination.

Only the port A1 in the switch 10 recognizes the virtual image bus 1v. For example, the port A2 of the downstream switch 20 recognizes the port A1 merely as an upstream port of the port A2 itself. This is because, when a Peer-to-Peer packet is being processed at an upstream port, packets destined only for upstream ports basically exist at a downstream port.

The management device 300 includes a non-illustrated processor and carries out various controls to manage the I/O bus system 1 of the information processing apparatus 500.

For example, when an I/O device 50 is removed from or newly connected to the port (slot) of the switch 20, the hot plug controller 60 on the corresponding board 200 notifies the management device 300 of the removal or the connection. Namely, the management device 300 acknowledges connection or removal of an I/O device 50 to or from the port (slot) of the switch 20 via the hot plug controller 60.

Upon acknowledging such a change in configuration of the I/O device 50, the management device 300 notifies the switches 10 and 20 of the change.

The management device (virtual bus data generator) 300 generates the virtual bus data 161. Specifically, the management device 300 obtains the topology data (tree structure) of the I/O bus system 1 and data about virtualized area VA from a non-illustrated memory stored in the management device 300 while the information processing apparatus 500 is being activated in responsive to power-on of the information processing apparatus 500.

The data of topology of the I/O bus system 1 and the virtualized area VA are preferably registered in the management device 300 in advance. Alternatively, the user may input data of the topology and the virtualized area VA via a non-illustrated input device such as a keyboard or mouse. The input data is stored in a non-illustrated memory.

The management device 300 generates the virtual image bus 1v by removing the virtualized area VA that the user has previously registered from the obtained topology of the I/O bus system 1 and virtually and directly connecting the remaining part of the I/O bus system 1. The management device 300 generates the virtual bus data 161 by indicating the virtual image bus 1v in data recognizable by the OS.

The management device 300 notifies the switch 10 of the generated virtual bus data 161 and causes the switch 10 to store the virtual bus data 161 into the memory 16.

The management device (routing data generator) 300 generates also the routing data 162. The management device 300 follows the tree topology of the I/O bus system 1 from each I/O device 50 disposed at an endpoint to the upstream root complex 40 and stores therein the respective routes. In other words, the management device 300 stores therein the positions and the sequence of all the ports disposed along each route.

The management device 300 generating the routing data 162 by registering, for each port on a route, a downstream contiguous port to be the transmitting port and a further downstream contiguous port to the transmitting port to be the destination data to be changed.

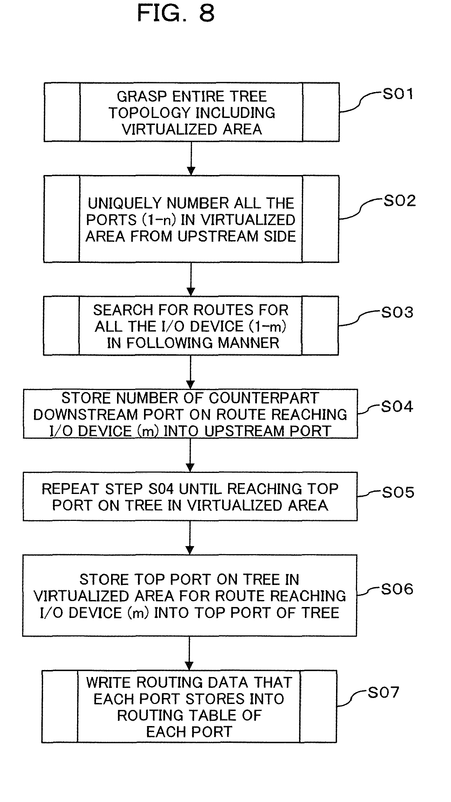

FIG. 8 is a flow diagram illustrating a succession of procedural steps (steps S01-S07) of generating the routing data 162 in the information processing apparatus 500 of the first embodiment.

In step S01, the management device 300 grasps the entire tree topology of the I/O bus system 1 including the virtualized area VA.

In step S02, the management device 300 numbers all the ports in the virtualized area VA. Specifically, all the ports (1 through n) in the virtualized area VA are numbered uniquely from the top port (at the upstream end) on the tree in the virtualized area VA.

For example, the ports A1, B1, B3, B2, B4, A2, A4, A3, and A5 in the I/O bus system 1 of FIG. 4 are numbered from 1 to n (here n=9) for identification. Hereinafter, the reference numbers A1, B1, B3, B2, B4, A2, A4, A3, and A5 are used as identifications of the individual ports.

In the step S03, the management device 300 starts searching for routes for all the I/O devices 50 (1 through m) on the I/O bus system 1. Here, the numbers 1 through m corresponds to the identification numbers of the respective I/O devices 50 and the number m corresponds to m=2 in the example of FIG. 4.

Specifically, in step S04, the management device 300 stores therein a port number of a port downstream of an upstream port for a route to reach an I/O device (m) and in step S05, the processing of step S04 is repeated until each route for which an upstream port and a downstream port are stored in association with each other reaches the top port on the tree in the virtualized area VA.

In step S06, the top port in the tree stores therein the top port in the tree in the virtualized area VA to be a route reaching each I/O device 50 (m).

Description will now be made assuming the I/O device #1 is selected in the example of FIG. 4. It is understood that a route to a port upstream of I/O device #1 passes through the port A2 in the switch #1. To reach the port A2, the route passes through also the superordinate (upstream) port B2. Furthermore, the route passes through the upstream port B1 to reach the port B2 and passes through port A1 to reach port B1. The management device 300 stores the routes grasped in the above manner into the non-illustrated memory.

In step S07, the management device 300 writes route data stored for each port, as the routing data 162, into memories 16 and 26 of the ports of the switches.

Namely, on the basis of the route searching performed in steps S03-S06, the management device 300 generates the routing data 162 indicating that the port B2 transmits a packet destined for the port A2 or the port A3 to the port A2 and stores the generated routing data 162 for the port B2 into the memory 26 in the switch #1. In the same manner, the management device 300 generates the routing data 162 indicating that the port B1 transmits a packet destined for the port B2, the port A2 or the port A3 to the port B2 and stores the routing data 162 for the port B1 into the memory 16 in the switch #0.

Since the port A1 is the most upstream port that is connected to the virtualized area VA in the I/O bus system 1, the routing data 162 is also stored in the port A1. Namely, the management device 300 generates the routing data 162 indicating that packet destined for the port A2 or the port A3 has the destination in the virtualized area VA of the port B2 and is thereby transmitted to the port B1, and stores this generated routing data 162 into the memory 16 of the switch #0.

If the topology of the I/O bus system 1 is changed while the information processing apparatus 500 is operating, the management device 300 resets the routing data 162.

The routing data 162 is reset when the physical tree topology of the I/O bus system 1 is changed. The change is exemplified by cases where the I/O device #2 is removed and another I/O device 50 is installed in place of the I/O device #2 in the configuration of FIG. 4.

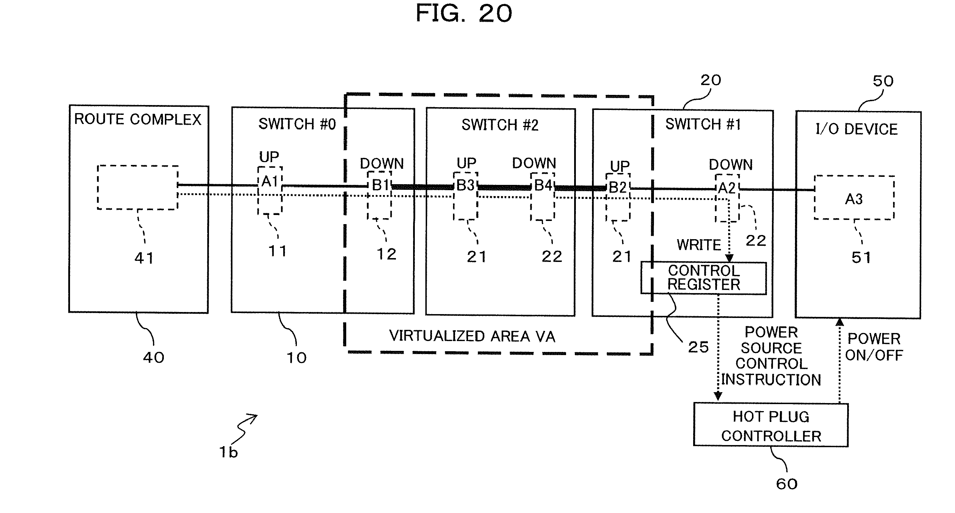

When the physical tree topology is changed, the processing of the flow diagram FIG. 8 is carried out on the changed point and the routing data 162 is updated by adding newly created routing data 162 to the routing data 162 that has been used. Here, the physical tree topology of the I/O bus system 1 of FIG. 1 is assumed to be changed by adding a switch #2 as illustrated in FIG. 20. When the topology of FIG. 1 is changed to that of FIG. 20, the position of the I/O device 50 seen from the OS is unchanged but the routing data 162 additionally has data related to port B3 and B4 of the switch #2.

The management device 300 notifies the changed routing data 162 to the switches 10 and 20.

If the configuration of the I/O device 50 is changed, the management device 300 updates the second register 14 in the switch #0. For example, if the I/O device 50 is hot-removed, the management device 300 stores data representing "not-installed" in the control register copy regarding the removed I/O device 50 in the second register 14.

The management device 300 further controls the power source of the board 200. For example, the management device 300 transmits a power source control instruction to the power source control circuit 70 of the board 200. In response to the power source control instruction, the power source control circuit 70 turns on/off the power source of the board 200.

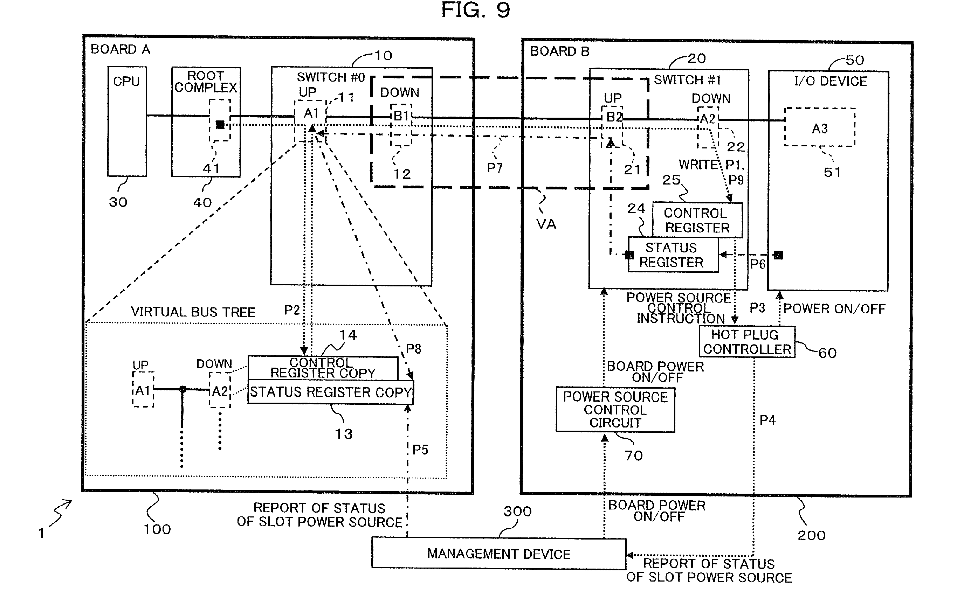

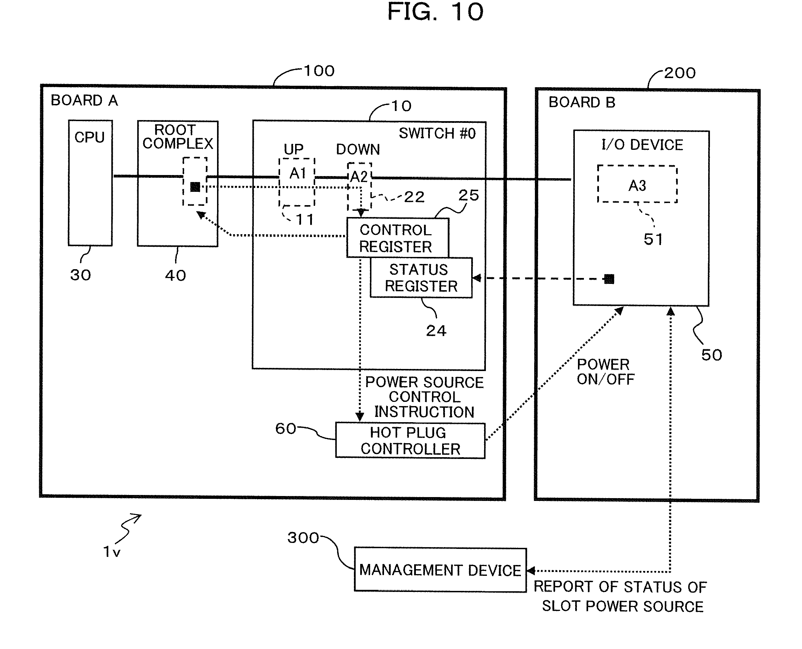

Here, description will now be made in relation to processing performed when the I/O device 50 is replaced in the information processing apparatus 500 of the first embodiment with reference to FIGs. 9 and 10. FIG. 9 is a diagram illustrating data flow in the I/O bus system 1; and FIG. 10 is a diagram illustrating the virtual image bus 1v of the I/O bus system 1 of FIG. 1.

When the I/O device 50 is being replaced under a state where the information processing apparatus 500 is energized, the root complex 40 writes data (power source control instruction) for hot-addition/removal into the control register 25 of the downstream port A2 of the switch #1 (see Arrow P1 in FIG. 9). During this operation, the controller 15 monitors a packet passing through the port A1 and also retains data about the I/O device 50 to be removed or added in the first register 13 and the second register 14 (see Arrow P2 in FIG. 9).

The hot plug controller 60 turns off the power source of the I/O device 50 on the basis of the value of the control register 25 (see Arrow P3 in FIG. 9). The hot plug controller 60 notifies the management device 300 that the power source of the I/O device 50 is turned off, in other words, that the I/O device 50 is removed (Arrow P4 in FIG. 9).

After the I/O device 50 is removed from the switch #1, the management device 300 sets data indicating that the I/O device 50 has been removed in the second register 14 of the switch #0 (see Arrow P5 in FIG. 9), so that the data is notified to the controller 15.

When an I/O device 50 is being installed to the switch #1, the status register 24 of the switch #1 is updated (see Arrow P6 in FIG. 9) and the controller 15 of the switch #0 is notified that the I/O device 50 has been mounted (see Arrow P7 in FIG. 9). Upon receipt of the notification, the switch #0 updates the status register copy 131 in the first register 13 (see Arrow P8 in FIG. 9).

Then, the OS transmits a power-on instruction (power source control instruction) to the I/O device 50 newly mounted, and the instruction is written into the control register 25 of the switch #1 (see Arrow P9 in FIG. 9). This turns on the power source of the slot via the hot plug controller 60 and the OS initializes the I/O device 50, which then comes ready to be used.

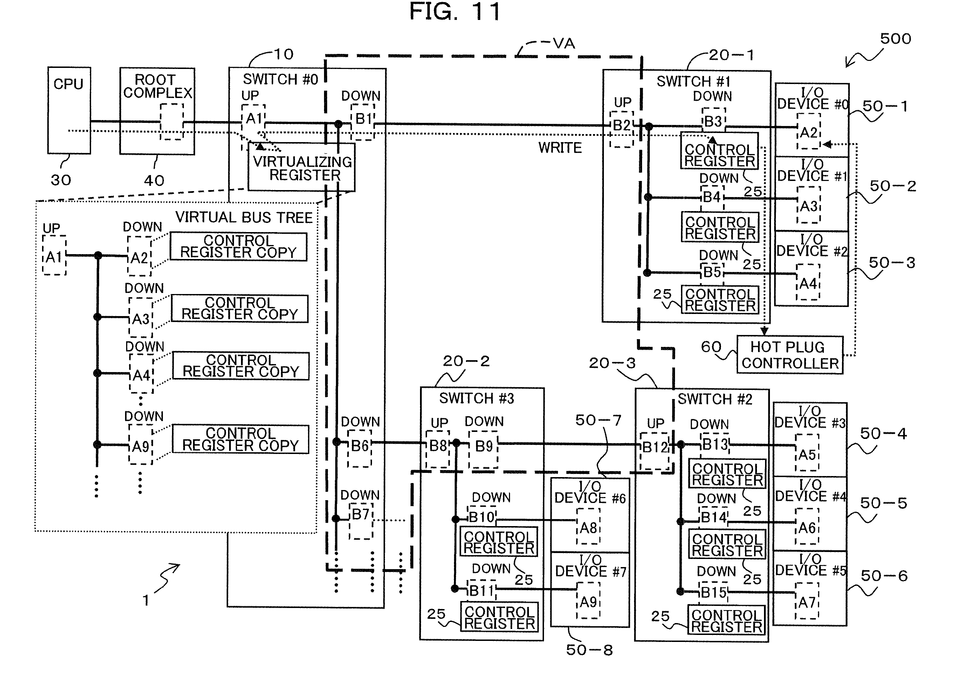

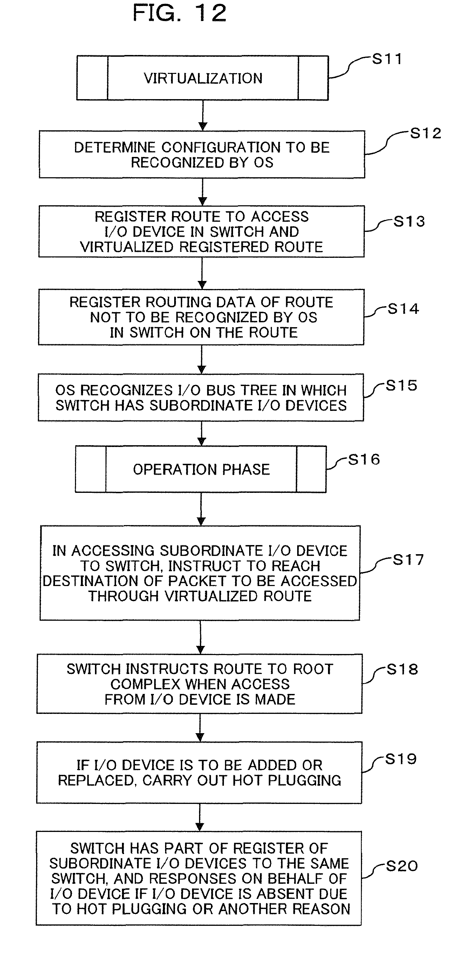

The overview of the method of managing the I/O bus system 1 in the information processing apparatus 500 of the first embodiment configured as above will now be described along the flow diagram of FIG. 12 (steps S11-S20) with reference to the configuration of the I/O bus system 1 illustrated in FIG. 11

The I/O bus system 1 illustrated in FIG. 11 includes the CPU 30, the root complex 40, switches 10 and 20-1 to 20-3, and a hot plug controller 60.

The switch 10 (switch #0) connected to the root complex 40 includes an upstream port A1 and downstream ports B1, B6, and B7. The downstream port B1 is connected to an upstream port B2 included in the switch 20-1 (switch #1), and the downstream port B6 is connected to an upstream port B8 included in the switch 20-2 (switch #3).

The switch 20-1 includes downstream ports B3 to B5. The port B3 is connected to an I/O device 50-1 (I/O device #0); the port B4 is connected to an I/O device 50-2 (I/O device #1); and the port B5 is connected to an I/O device 50-3 (I/O device #2).

The switch 20-2 includes downstream ports B9 to B11. The port B9 is connected to an upstream port B12 included in the switch 20-3 (switch #2). The port B10 is connected to an I/O device 50-7 (I/O device #6); and the port B11 is connected to an I/O device 50-8 (I/O device #7).

The switch 20-3 includes downstream ports B13-B15. The port B13 is connected to the I/O device 50-4 (I/O device #3); the port B14 is connected to the I/O device 50-5 (I/O device #4); and the port B15 is connected to the I/O device 50-6 (I/O device #5).

The first embodiment assumes that the switches 10, 20-1, 20-2, and 20-3 are provided on respective different boards.

In the I/O bus system 1, the ports B1, B6, and B7 in the switch #0, the port B2 in the switch #1, the ports B8 and B9 of the switch #3, and the port B12 of the switch #2 are included in the virtualized area VA.

To begin with, the I/O bus system 1 of FIG. 11 sets the virtualized area VA in step S11. Then, the configuration to be recognized by the OS is determined in step S12. Specifically, the management device 300 determines the virtual image bus 1v by excluding the virtualized area VA from the I/O bus system 1. The management device 300 further generates virtual bus data 161 related to the virtual image bus determined in step 12.

In step S13, the management device 300 stores the generated virtual bus data 161 into the memory 16 of the switch #0. Thereby, routes to access the respective I/O devices 50 are registered into the switch #0 and the I/O bus system 1 is virtualized.

In the example of FIG. 11, ports A1, B1, B2, B3, and A2 keeping this sequence are registered to be the route from the root complex 40 to the I/O device 50-1, and the ports A1, B6, B8, B9, B12, B15, and A7 keeping this sequence are registered to be the route accessing the I/O device 50-6.

In the next step S14, the management device 300 registers routes not to be recognized by the OS, that is the routing data 162 to pass packets through the virtualized area VA, into the switches 10 and 20.

For example, in the example of FIG. 11, the management device 300 generates, for the port B12, the routing data 162 indicating that a packet destined for the port A5 or B13 is transmitted to the port B13, and stores the generated routing data 162 into a non-illustrated memory included in the switch #2. Similarly, the management device 300 generates, for the port B9, the routing data 162 indicating that a packet destined for the port B12, B13, or A5 is to be transmitted to the port B12, and stores the generated routing data 162 into a non-illustrated memory included in the switch #3.

The OS refers to the notified virtual bus data 161 and recognizes the I/O bus system 1 to have the virtual image bus 1v in which the I/O devices 50 are disposed immediately downstream of the switch #0 (step S15).

The above procedure completes the virtualization of the I/O bus system 1 in the information processing apparatus 500. Then the information processing apparatus 500 comes into the operation phase.

In the operation phase of step S16, when an access is made to the I/O device 50, which the OS recognizes to be disposed downstream of the switch #0, the switches 10 and 20 determine a route of the packet by referring to the routing data 162, and forward the packet passes through the virtualized area VA and then reaches its destination, and forwards the packet (step S17).

When the I/O device 50 is making an access to the root complex 40, the switches 10 and 20 determine a route to reach the root complex 40 and forwards the packet to the determined route (step S18). If an I/O device 50 is being added or replaced, hot plugging is to be carried out (step S19).

The switches 10 and 20 each store therein at least part of register data of the I/O device 50 that the OS recognizes to be disposed downstream of the switch #0 and respond on behalf of the I/O device 50 when the I/O device 50 is absent for being subjected to hot plugging, for example, (step S20).

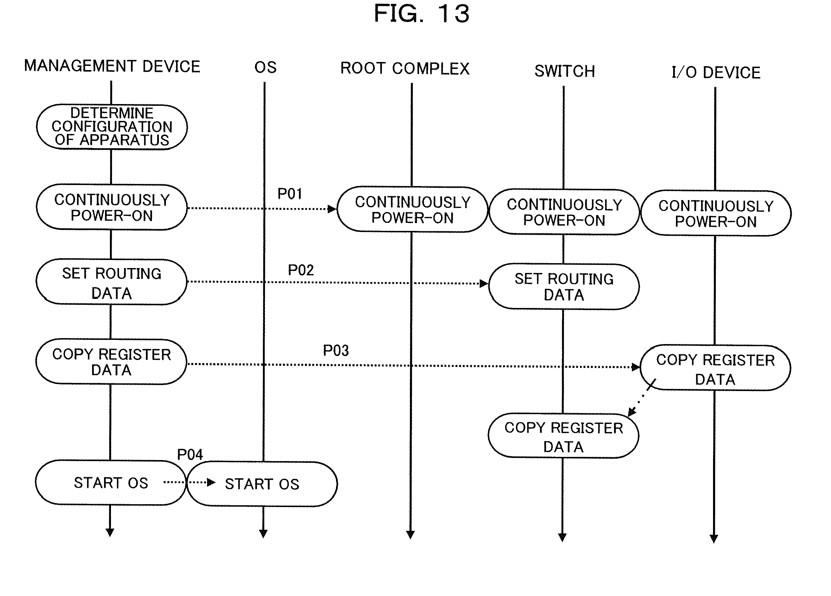

FIG. 13 is a sequence diagram illustrating processing when the information processing apparatus 500 of the first embodiment is being started. The example of FIG. 13 assumes that a PCIe slot is disposed at a switch and the I/O device 50 is achieved by placing a PCIe card in the PCIe slot.

The OS, the root complex 40, the switches 10 and 20, and the I/O devices 50 carry out respective processing under control of the management device 300.

After the information processing apparatus 500 is powered on, the management device 300 determines the configuration of the apparatus and generates the virtual bus data 161. Then, the management device 300 issues a power source control instruction of continuously power-on to the power source control circuits 70 of the boards 100 and 200, so that the root complex 40 is powered on (see Arrow P01). This accompanies power-on of the switches 10 and 20 and the I/O device 50, which thereby come into a state of continuously powered-on.

Furthermore, the management device 300 generates and sets the routing data 162 and transmits the generated routing data 162 to the switches 10 and 20 (see Arrow P02). Then the routing data 162 is set in the respective memories 16 and 26 of the switch 10 and 20.

After that, the management device 300 copies the register data of each of the ports being connected to the I/O devices 50 into the first register 13 and the second register 14 of the switch 10 (see Arrow P03). Specifically, the management device 300 causes each I/O device 50 to transmit copies of the status register 24 and the control register 25 to the switch 10.

Then the management device 300 instructs the CPU 30 to start the OS (see Arrow P04).

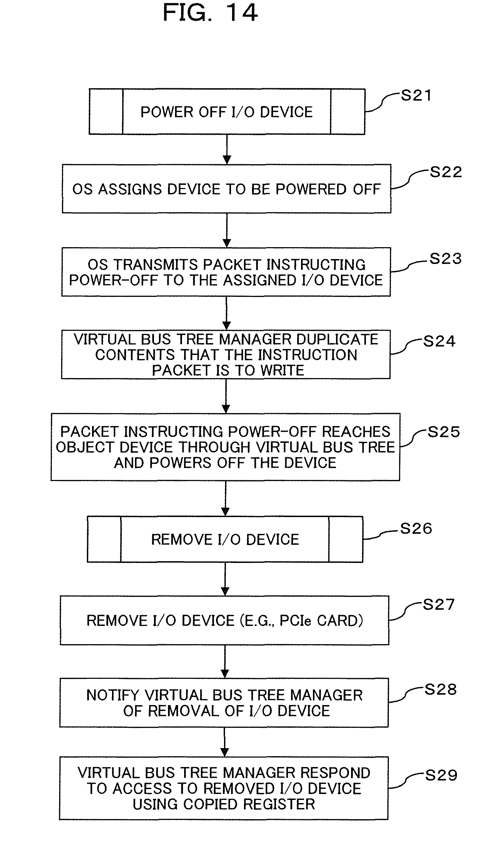

Next, description will now be made in relation to the process performed when the I/O device 50 is to be removing from the information processing apparatus 500 being in the energized state (activating state) along the flow diagram FIG. 14 (steps S21-S29) with reference to FIG. 11.

For example, when the I/O device 50-1 of FIG. 11 is to be removed from the information processing apparatus 500 being in the energized state, the power source of the I/O device 50-1 is firstly to be turned off in step S21. Specifically, the OS assigns the I/O device 50-1 to be powered off (step S22) and issues a packet to instruct that the power source of the slot on the port B3 in the switch 20-1, which port B3 is connected to the I/O device 50-1 (step S23). In the configuration of FIG. 11, the power source control register of the I/O device 50-1 is disposed in the port 22 of switch #1 which port 22 is connected to the I/O device 50-1.

The packet that instructs that the power source of the I/O device 50-1 is turned off is converted into a packet capable of passing through the virtualized area VA by the controller 15 in the port A1 of the switch #0 referring to the routing data 162.

The controller 15 in the switch #0, which manages the virtual image bus 1v, duplicates the write data of the packet into the control register copy of the second register 14 (step S24). The copy is stored in the control register copy 141 regarding the control register 25 of the port B3, which is connected to the I/O device 50-1 having transmitted the packet. The data duplicated in step S24 is used as response data that is replied to the OS if the OS makes an access to the slot for poring while the power source of the intervening device disposed in the virtualized area VA between the switch #0 and the switch #1 that the I/O device 50-1 is connected to is turned off.

The packet instructing an object I/O device 50-1 to power-off itself passes through the virtualized area VA and reaches the objective I/O device 50-1. Specifically, the packet instructing the I/O device 50-1 to power-off reaches the port B3 connected to the I/O device 50-1 and is written into the control register 25 of the port B3. After the instruction of power off is written into the control register 25, the power source of the slot (I/O device 50-1) is turned off via the hot plug controller 60 (step S25).

After that, the I/O device 50-1 is removed in step S26. Namely, the I/O device 50-1 is removed from the slot by, for example, the operator (step S27). Then, the switch #1 notifies the controller 15 of the switch #0, which manages the virtual image bus 1v, that the I/O device 50-1 has been removed (step S28).

For example, when the power source of the slot of the port B3 in the switch #1 is turned off, the status of the power source of the status register 24 of the port B3 is turned from on to off. The management device 300 records "not installed" into the control register copy 141 associated with the port B3 included in the second register 14 of the switch #0.

Here, if the power source of the slot of the port B3 of the switch #1 is turned off, the switch #1 may issue another unique packet notifying that the power source of the slot of the port B3 is turned off to the switch #0, which records "not-installed" in the control register copy 141 of the second register 14 that is associated with the port B3. This unique packet is issued when, for example, the value of the status register 24 changes, and the packet is configured to be a writing command to write the register value.

In response to an access to the I/O device 50-1, which has been removed, the controller 15 in the switch #0 replies with, for example, the control register copy 141 stored in the second register 14 (step S29).

This can prevent the OS from panicking even when the I/O device 50-1 is hot-removed.

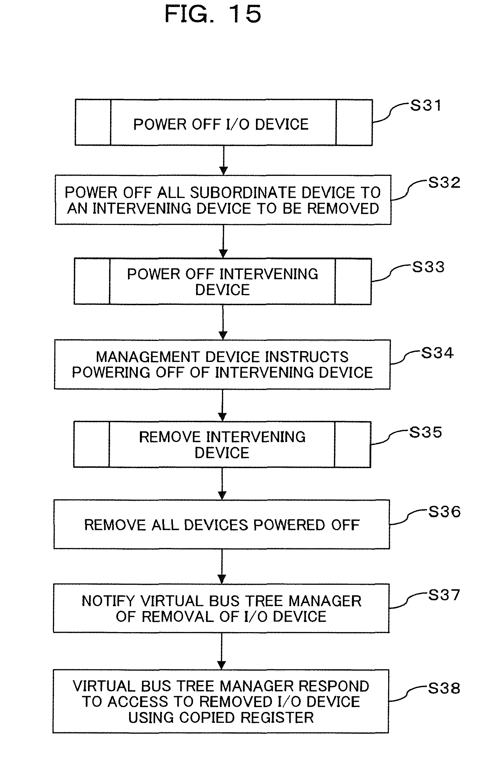

Next, description will now be made in relation to the process performed when an intervening device is removed from the information processing apparatus 500 of the first embodiment being in the energized state (activating state) with reference to the flow diagram illustrated in FIG. 15 (steps S31-38).

Here, an intervening device represents a device being interposed between the switch 20, which is connected to an I/O device 50 serving as an endpoint, and the root complex 40 and also being disposed in the virtualized area VA. An intervening device is exemplified by the switch #3 in FIG. 11.

An intervening device is disposed in the virtualized area VA and is not directly recognized by the OS. For the above, an intervening device can undergo hot swapping.

For example, when the switch #3 is to be removed from the information processing apparatus 500 being in the energized state, the power sources of the I/O devices 50-7 and 50-8 are turned off in step S31. Namely, the power sources of all the I/O devices 50-7 and 50-8 subordinate to (downstream of) the switch #3 that is the intervening device to be removed are turned off (step S32).

In the next step S33, the intervening device (switch #3) to be removed is powered off. Specifically, the management device 300 instructs the power source control circuit 70 to power off the board 200 on which the switch #3 is mounted (step S34). Thereby, the power source of the switch #3 is turned off.

In the example of FIG. 11, the switch #0 causes the OS to recognize the virtual image bus 1v and the switch #0 responds to the OS on behalf of the switch #3, and the I/O devices #6 and #7. The physical disappearance of the switch #3 serving as the intervening device and the I/O devices #6 and #7 connected to the switch #3 does not affects the OS and therefore the OS can escape from panicking.

After the power source of the board 200 is turned off, the management device 300 changes the value of the status register copy of the port A1 of the switch #0 to a value representing that "no card is present on the slot". This avoids erroneous operations such as powering on the slot while the power source of the board 200 is turned off.

The intervening device (switch #3) is removed in step S35. Namely, when all the devices (the switch #3 and the I/O devices #6 and #7) that have been powered off are removed (step S36), the management device 300 notifies the controller 15 of the switch #0 of the removal of the switch #3 and the I/O devices #6 and #7 (step S37). After that, the switch #0 respond to packets destined for a device that has been turned off, that is, a device that no longer exits, in the virtual image bus 1v with the control register copy 141 stored in the second register 14 (step S38).

Thereby, hot removing an intervening device does not cause the OS to panic.

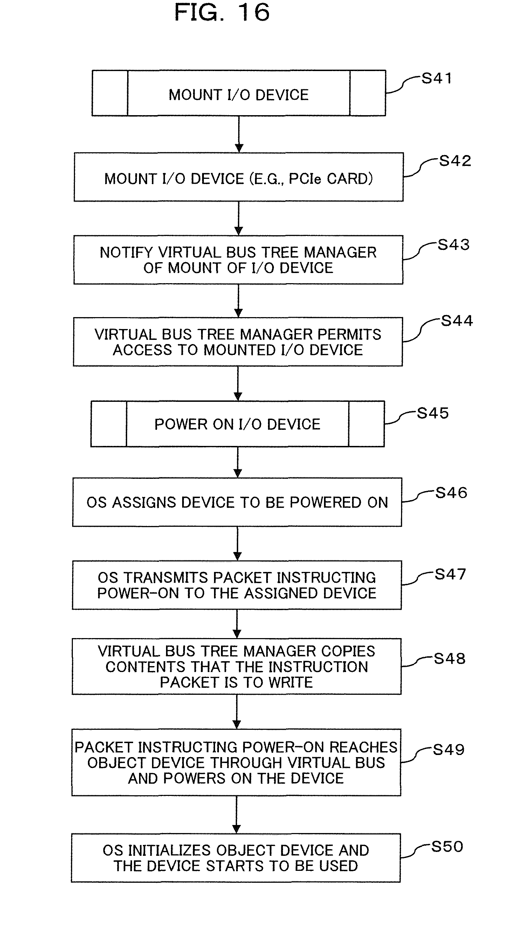

Next, description will now be made in relation to the processing performed when an I/O device 50 is added to the information processing apparatus 500 of the first embodiment in the state of being energized (being activated) along the flow diagram (step S41 to S50) of FIG. 16. The following example assumes that an I/O device 50 is attached to the I/O bus system 1 illustrated in FIG. 1.

In step S41, an I/O device 50 is mounted onto a slot of the switch #1. Specifically, when the operator or the like mounts the I/O device 50, such as the PCIe card, onto the slot of the switch #1 (step S42), the mounting of the I/O device 50 is notified to the switch #0 via, for example, the management device 300 (step S43). Then, in the switch #0, the controller 15 allows access to the I/O device 50 that has been added (step S44).

In the next step S45, the power source of the I/O device 50 is turned on. Specifically, the OS assigns an I/O device 50 that is to be powered on, that is, the I/O device 50 that has been newly added (step S46) and issues a packet instructing the assigned I/O device 50 to power on to the assigned I/O device 50 (step S47).

The controller 15 converts the destination of a packet at the port A1 of the switch #1 from the destination on the virtual image bus 1v to a virtual address by referring to the routing data 162 and transmits the converted packet, as power-on instruction packet, to the virtualized area VA.

At the port A1 of the switch #0, the write data of the packet is stored (duplicated) into the control register copy in the second register (fifth storing unit) 14 (step S48). The destination of storing the write data of the packet is the second register 14 associated with the port A2 of the switch #1. This means that the second register 14 stores therein instruction data that the CPU 30 (the OS) issued for the I/O device 50.

The power-on instruction packet passes through the virtualized area VA and then reaches the port A2 in the switch #1. The data representing the power-on instruction is written into the control register 25 of the switch #1. After the power-on instruction is written into the control register 25, the slot is powered on by the hot plug controller 60 (step S49).

The status register 24 associated with the port A2 on the switch #1 updates the power-source status of the slot from off to on. After the updating, the management device 300 records data representing "installed" into the control register copy of the second register 14 in the switch #0 in association with the port A2.

Alternatively, after the power source of the slot of the port A2 in the switch #1 is turned on, the switch #1 issues a new unique packet to the switch #0 for notification to cause the switch #0 to record "installed" in the control register copy 141 of the second register 14 in association with the port A2. Such a unique packet is issued when, for example, the value of the status register 24 is changed and is regarded as a write instruction of a register value.

Then, the OS initializes the I/O device 50 that has been newly added, which starts the operation of the device (step S50).

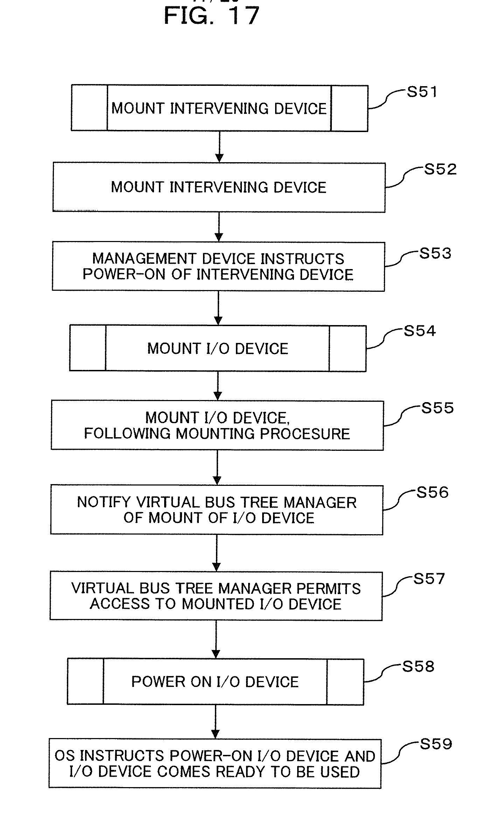

Here, description will now be made in relation to the processing performed when an intervening device is added to the information processing apparatus 500 of the first embodiment being in the state of being energized (being activated) along the flow diagram (step S51 to S59) of FIG. 17. The following example assumes that the switch 20-2 (switch #3) is attached as the intervening device to the I/O bus system 1 illustrated in FIG. 11.

In step S51, the intervening device (switch #3) is mounted onto a board (e.g., the board B) of the information processing apparatus 500. Specifically, when the operator or the like mounts the intervening device onto the board B (step S52), the management device 300 turns on the power source of the board B, on which the intervening device has been mounted (step S53).

In step S54, I/O device 50 (I/O devices #6 and #7) is attached into the slot of the switch #3. When the operator or the like attaches the I/O device 50 into the slot of the switch #3 along the procedure of mounting the I/O device 50 (step S55), the mounting of the I/O devices 50 is notified to the switch #0 via, for example, the management device 300 (step S56). Then, in the switch #0, the controller 15 allows access to the I/O device 50 that has been newly added (step S57).

In the next step S58, the power source of the I/O device 50 is turned on. Specifically, performing the same processing as performed in steps S46-S50 of FIG. 16, the OS assigns an I/O device 50 that is to be powered on, that is the I/O device 50 that has been newly added, and finally the assigned I/O device 50 comes ready for use (step S59).

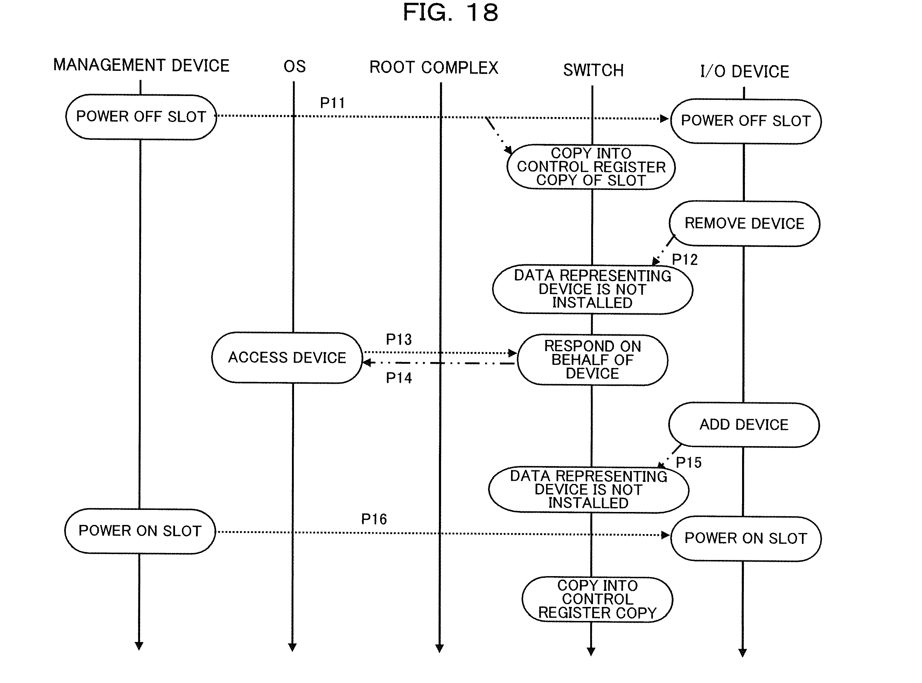

FIG. 18 is a sequence diagram illustrating processing performed when an I/O device 50 is to be replaced with another I/O device 50 in the information processing apparatus 500 of the first embodiment. In the example of FIG. 18, a PCIe slot is disposed at a position where each I/O device 50 is mounted, and each I/O device 50 is achieved by placing a PCIe card into the PCIe slot.

The management device 300 powers off the I/O device 50 to be replaced via the hot plug controller 60 (see Arrow P11) and the write data of a packet is copied into the control register copy of the second register 14 in the switch #0.

The I/O device 50 to be replaced is removed (disconnected) and data representing "not-installed" is recorded into the control register copy 141 of the second register 14 in the switch #0 (see Arrow P12).

After that, when the OS accesses the removed I/O device 50, the controller 15 in the switch #0 responds to the OS with, for example, the control register copy 141 stored in the second register 14 (see Arrows P13 and P14).

After another I/O device 50 is newly attached to the slot (addition), the mounting of the new I/O device 50 is notified to the switch #0 (see Arrow P15). The switch #0 records data representing "installed" into the control register copy of the second register 14 included in the switch #0.

The management device 300 turns on the power source of the slot where the new I/O device 50 is placed (see Arrow P16), and the write data of the packet at the port A1 of the switch #0 is stored (duplicated) into the control register copy in the second register 14.

As the above, in the information processing apparatus 500 of the first embodiment, the switch #0 which is connected to the root complex 40 and which is disposed upstream causes the OS to recognize the virtual image bus 1v and thereby the OS does not recognize the devices in the virtualized area VA. This makes it possible to control the power sources of the intervening devices and the I/O devices 50 in the virtualized area VA under a state where the information processing apparatus 500 of the first embodiment is active.

For example, powering off the board B mounting thereon the switch #1 and also powering off the all the I/O devices 50 subordinate to the switch #1, the I/O bus system 1 of FIG. 1 can replace the board B with another board, keeping the operation of the board A. This can enhance the maintenance ability to deal with a failure in element in the information processing apparatus.

Packet forwarding in the virtualized area VA can be accomplished by the switches 10 and 20 rewriting the header of a packet through referring to the routing data 162.

While the information processing apparatus 500 is active, which means that the board A equipped with the CPU 30 and the root complex 40 is operating, an intervening device and an I/O device can be added or removed. This makes it possible to freely configure the information processing apparatus by adding or removing devices that have not been planed in advance.

The technique disclosed here is not limited to the above first embodiment and various changes and modification can be suggested without departing from the gist of the present invention. The devices and procedural steps of the first embodiment can be omitted according to the requirement or can be combined appropriately.

For example, the first embodiment assumes that the I/O bus system 1 is connected via the PCIe protocol, but the connection is not limited to this. Alternatively, at least part of the I/O bus system 1 may be connected via another protocol such as Ethernet (registered trademark).

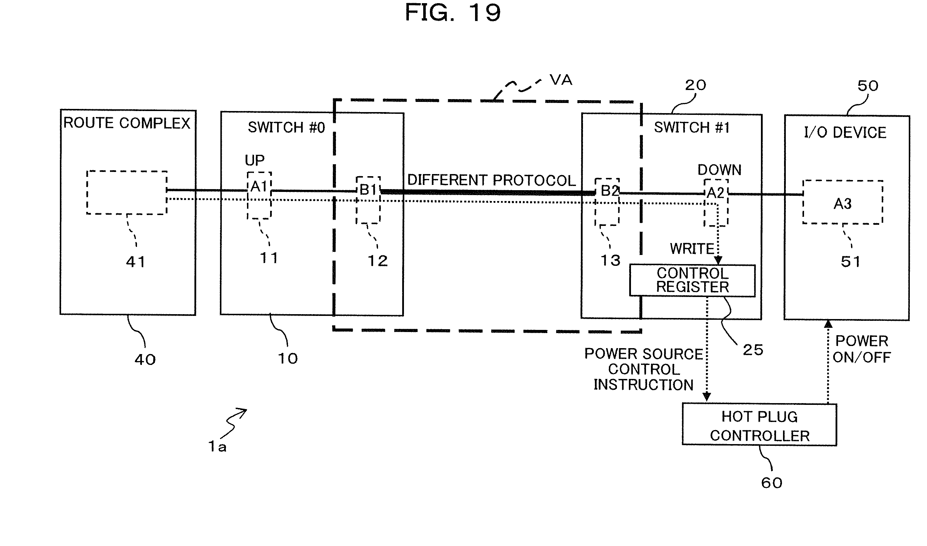

FIG. 19 is a diagram illustrating an I/O bus system 1 of an information processing apparatus according to a first modification of the first embodiment.

In the I/O bus system 1a of FIG. 19, the port B1 of the switch #0 and the port B2 of the switch #1 the same as those included in the I/O bus system 1 are connected via a different protocol from the PCIe.

The first embodiment can also be applied to the I/O bus system 1a of FIG. 19.

FIG. 20 is a diagram illustrating an I/O bus system of an information processing apparatus according to a second modification of the first embodiment.

The I/O bus system 1b of FIG. 20 includes a switch #2 disposed in the virtualized area VA of the I/O bus system 1 of FIG. 1. The first embodiment can also be applied to the I/O bus system 1b of FIG. 20. The virtual image bus 1v of the I/O bus system 1b of FIG. 20 is the same as that illustrated in FIG. 10.

Multiple switches may be cascaded in the virtualized area VA.

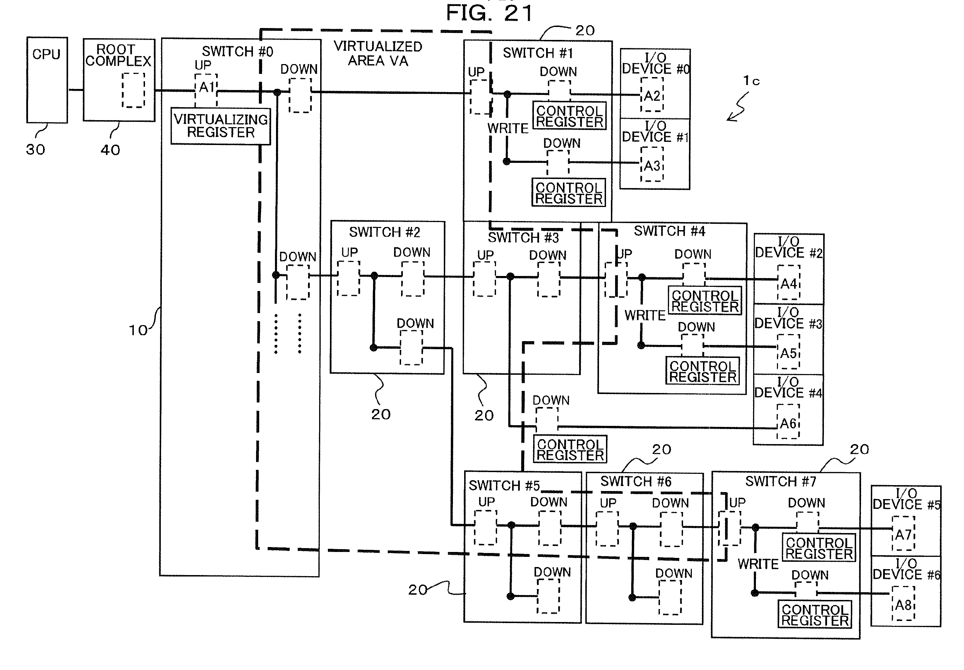

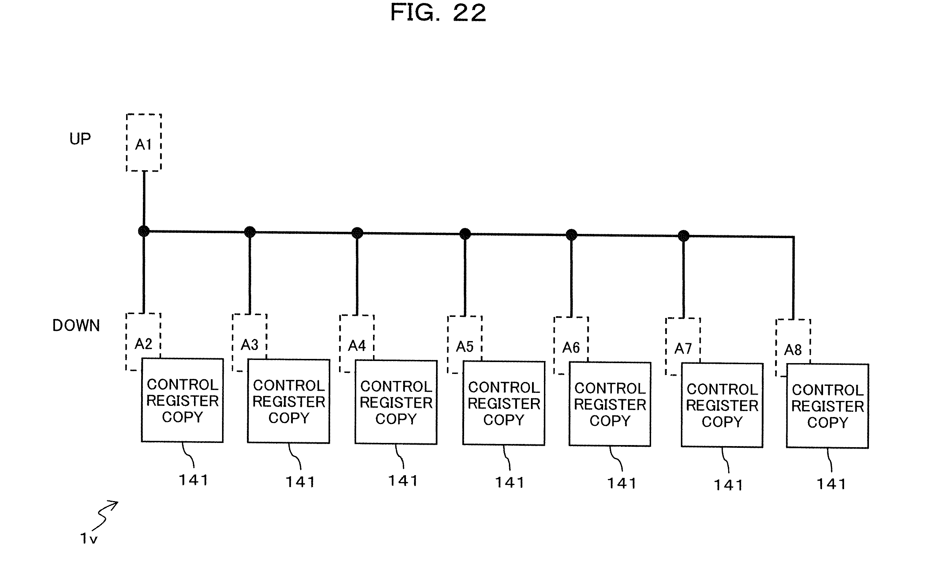

FIG. 21 is a diagram illustrating an I/O bus system 1 of an information processing apparatus according to a third modification of the first embodiment; and FIG. 22 is a diagram illustrating a virtual image bus 1v of the I/O bus system 1c of FIG. 21.

The I/O bus system 1c of FIG. 21 includes multiple switches #2, #3, #5, and #6, which are cascaded in the virtualized area VA. In other words, setting such cascaded switches #2, #3, #5, and #6 to be the virtualized area VA, the switch #0 can cause the OS to recognize the virtual image bus 1v of FIG. 22.

Furthermore, part of the I/O bus system 1 in the virtualized area VA may be connected via a different protocol from PCIe.

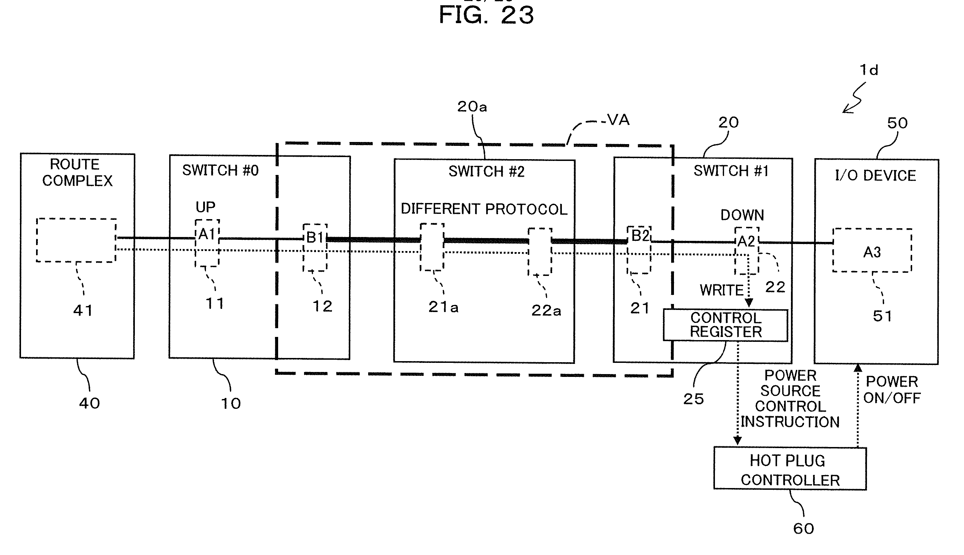

FIG. 23 is a diagram illustrating an I/O bus system 1 of an information processing apparatus according to a fourth modification of the first embodiment. The I/O bus system 1d of FIG. 23, the ports in the switch #2 included in the virtualized area VA are connected to one after another via a different protocol from PCIe. Further alternatively, multiple switches may be cascaded in the virtualized area VA also in the fourth embodiment.

Those ordinarily skilled in the art can carry out and generate the above first embodiment and modifications by referring to the above disclosure.

All examples and conditional language recited herein are intended for the pedagogical purposes of aiding the reader in understanding the invention and the concepts contributed by the inventor to further the art, and are not to be construed limitations to such specifically recited examples and conditions, nor does the organization of such examples in the specification relate to a showing of the superiority and inferiority of the invention. Although one or more embodiments of the present inventions have been described in detail, it should be understood that the various changes, substitutions, and alterations could be made hereto without departing from the spirit and scope of the invention.

### [Reference sign list]

- 1,1a,1b,1c,1d: I/O bus system
- 1v: virtual image bus
- 10,20: switch (relay)
- 11,12,21,22,41,51: port
- 13: first register (third storing unit)
- 14: second register (third, fourth, and fifth storing units)
- 24: status register
- 25: control register
- 15,27: controller (notifier, response processor)
- 16: memory (second, first storing units)
- 26: memory (second storing unit)
- 30: CPU (processing device)
- 40: root complex
- 50: I/O device
- 60: hot plug controller
- 70: power source control circuit
- 100,200: board
- 131: status register copy
- 141: control register copy
- 161: virtual bus data
- 162: routing data
- 300: management device (virtual bus data generator, routing data generator)
- VA: virtualized region

## Claims

1. An information processing apparatus (500) comprising an Input/Output (I/O) bus system (1) having a tree shape formed by hierarchically connecting a plurality of relays (10, 20), the information processing apparatus (500) further comprising:
a first storing unit (16) that stores therein virtual bus data (161) representing a virtual bus tree configuration in which some of the routes in the I/O bus system (1) are virtually short-circuited; and
a notifier (15) that notifies the virtual bus data (161) to a processing device (30) disposed upstream of the I/O bus system (1).

2. The information processing apparatus according to claim 1, each of the plurality of relays (10, 20) comprising:
a second storing unit (16, 26) that stores therein routing data (162) that is to be used for data forwarding in the I/O bus system (1); and
a forwarding processor (15, 27) that forwards data using the routing data (162).

3. The information processing apparatus according to claim 2, the routing data (162) comprising:
destination data that is to be used to rewrite the header of data; and
forwarding destination data that represents a forwarding destination of the data.

4. The information processing apparatus according to claim 2 or 3, further comprising a routing data generator that generates the routing data (162).

5. The information processing apparatus according to claim 4, the routing data generator (300) regenerates, upon detection of a change in configuration of the I/O bus system (1), the routing data (162).

6. The information processing apparatus according to one of claims 1-5, further comprising:
a third storing unit (13, 14) that stores therein a copy (131, 141) of register data of one or more relays (20) each being connected to an I/O device (50) in the I/O bus system (1) among the plurality of relays (10, 20); and
a response processor (15) that responds to the processing device (30) using the copy (131, 141) stored in the third storing unit (13, 14).

7. The information processing apparatus according to one of claims 1-6, further comprising a virtual bus data generator (300) that generates the virtual bus data (161).

8. A method for controlling an information processing apparatus (500) comprising: an Input/Output (I/O) bus system (1) having a tree shape formed by hierarchically connecting a plurality of relays (10, 20) and comprising an I/O device (50); and a processing device (30) recognizing the I/O bus system (1) as a virtual bus tree configuration in which some of the routes in the I/O bus system (1) are virtually short-circuited, the method comprising:
at the processing device (30), issuing an instruction to power off the I/O device (50) that is to be removed;
after removing the I/O device (50) from the I/O bus system (1),
storing not-installed data representing the I/O device (50) is not mounted into a fourth storing unit (14) being included in an upstream relay (10) disposed upstream of the short-circuited routes of the I/O bus system (1) among the plurality of switches (10, 20); and
responding to the processing device (30) using the not-installed data stored in the fourth storing unit (14).

9. A method for controlling an information processing apparatus (500) comprising: an Input/Output (I/O) bus system (1) having a tree shape formed by hierarchically connecting a plurality of relays (10, 20); and a processing device (30) recognizing the I/O bus system (1) as a virtual bus tree configuration in which some of the routes in the I/O bus system (1) are virtually short-circuited, the method comprising:
after mounting an I/O device (50) onto the I/O bus system (1),
at the processing device (30), issuing an instruction to power on the I/O device (50);
storing data of the instruction issued for the I/O device (50) into a fifth storing unit (14) being included in an upstream relay (10) disposed upstream of the short-circuited routes of the I/O bus system (1) among the plurality of switches (10, 20); and
after powering on the I/O device (50)
transmitting the data of the instruction, the data being stored in the fifth storing unit (14), to the I/O device (50).
